(19)

Europäisches Patentamt
European Patent Office
Office européen des brevets

(11) **EP 2 346 044 A1**

(12) **EUROPEAN PATENT APPLICATION**
published in accordance with Art. 153(4) EPC

(43) Date of publication:
**20.07.2011 Bulletin 2011/29**

(21) Application number: **09824777.8**

(22) Date of filing: **04.11.2009**

(51) Int Cl.:
*G11B 7/254* (2006.01)    *C08F 290/06* (2006.01)
*C08F 299/02* (2006.01)    *C08G 18/67* (2006.01)
*C08G 59/17* (2006.01)    *G11B 7/24* (2006.01)
*G11B 7/257* (2006.01)

(86) International application number:
**PCT/JP2009/068791**

(87) International publication number:
**WO 2010/053078 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **05.11.2008 JP 2008283876**

(71) Applicant: **Nippon Kayaku Kabushiki Kaisha Tokyo 102-8172 (JP)**

(72) Inventors:
• **NAITOU, Masahiro**
  **Tokyo 115-8588 (JP)**

• **KOBAYASHI, Daisuke**
  **Tokyo 115-8588 (JP)**
• **KIDOBA, Jun**
  **Tokyo 115-8588 (JP)**
• **TSUTSUMI, Hiroki**
  **Tokyo 115-8588 (JP)**
• **MATSUO, Yuichiro**
  **Tokyo 115-8588 (JP)**

(74) Representative: **Gille Hrabal Struck Neidlein Prop Roos**
**Patentanwälte**
**Brucknerstrasse 20**
**40593 Düsseldorf (DE)**

(54) **UV-CURABLE RESIN COMPOSITIONS FOR OPTICAL DISCS AND CURED PRODUCTS THEREOF**

(57) The UV-curable resin compositions for optical discs are **characterized in that** they comprise (A) 15-70 wt% of a (meth)acrylate monomer that has an ethylene oxide chain in the molecule, (B) 5-50 wt% of a urethane (meth)acrylate, (C) 2-50 wt% of an epoxy (meth)acrylate, and (D) 1-10 wt% of a photopolymerization initiator, in the resin composition. The glass transition temperature of cured films thereof is 10-65°C and the maximum value of the dynamic loss factor tan $\delta$ of the cured films is in the range of 0.35-0.73.

EP 2 346 044 A1

**Description**

Technical Field

The present invention relates to UV-curable resin compositions for optical discs and cured products thereof. More particularly, the present invention relates to resin compositions for efficiently producing a next-generation high-density optical disc which is minimized in post-curing warpage and excels in durability and abrasion resistance. Also, in the present invention, the recording layer is not limited to the material of either of organic dye type recording layer or inorganic type recording layer, and both types of material are suitable for the recording layer.

Background Art

Common examples of optical disc recording media which have come in practical use to date include compact discs (CD), magneto-optical discs (MO), compact disc-recordable (CD-R) and compact disc-rewritable (CD-RW). These disc devices comprise a recording layer and a reflecting layer over a 1.2 mm poly carbonate substrate. In the disc devices, a protective layer comprising a UV-curable coating agent is provided for the purpose of protecting the recording layer and the reflecting layer against external factors. More recently, there have been put to practical use DVD-R, DVD-RW, DVD-RAM, DVD+R, DVD+RW and the like in which, in order to further improve storage capacity, the thickness of the polycarbonate substrate has been made half (0.6 mm) the conventional thickness and thereby two such substrates have been combined, and thereby problems such as birefrigence of the polycarbonate substrate and reduction in laser spot diameter have been solved. In any of these devices, a recording layer and a reflecting layer are formed on a 0.6 mm polycarbonate substrate, and a protective layer of a UV-curable resin or an adhesive layer is further provided for the purpose of protection or adhesion as in the above-mentioned devices.

However, the DVD recording media are still insufficient in capacity as a recording medium that may cope with expansion of capacity in the age of digital broadcasting in recent years. As a next-generation high-density optical disc, there has been proposed (Patent Document 1) and put to practical use an optical disc of the type (such as a blu-ray disc) in which a recording layer and a 100 $\mu$m thick transparent layer are laminated on the substrate, and write and read are made by blue laser light from the transparent layer side, not from the polycarbonate substrate.

As a method for forming this transparent layer (cover layer), a method comprising bonding an approximately 100 $\mu$m thick transparent film, and a method comprising applying a UV-curable resin by spin coating and curing the resin with UV light to form the layer have been proposed (Patent Document 2. and Patent Document 3).

Prior Art References

Patent Documents

Patent Document 1: JP 11-273147 A
Patent Document 2: JP 2002-230831 A
Patent Document 3 : JP 2005-171154 A

Summary of Invention

Problems to be Solved by the Invention

A problem of these cover layers, however, is that, because of their large thickness of around 100 $\mu$m, the substrate tends to warp when using a hard resin composition like the protective layer of CD etc., giving rise to an error in write and read. It is therefore necessary to make the cover layer hard enough to prevent warpage during curing, but low hardness tends to have flaws and tends to cause an error likewise. In order to cope with these problems, it is common practice to provide a hard coat layer on the cover layer. Further, in case the recording layer is of an organic dye type, it is necessary to provide a recording auxiliary layer low in modulus of elasticity at the time of curing between the cover layer and the dye type recording layer so as to facilitate a structural change of a dye at the time of laser recording, and thus it is common practice to form a triple-layer structure. These methods are not efficient in production of discs, and are a factor in cost increase in terms of production rate, yield and production equipment.

Means for Solving the Problems

As a result of extensive studies for solving the above problems, the present inventors have found a resin composition which is quickly deformed and restored in response to an external force by controlling the dynamic loss factor tan $\delta$ of a cured film of a UV-curable resin composition in a specific range. In other words, the present inventors have succeeded in developing a cover layer material which is resistant to flawing and is quickly restored even when flawed, even in a resin composition having a hardness low enough to prevent warpage of a substrate during curing, may conform to a structural change of an organic dye during recording on the organic dye recording layer, and does not need any hard coat layer and/or recording auxiliary layer.

Thus, the present invention relates to the following (1) to (11):

(1) A UV-curable resin composition for optical discs, comprising 15 to 70 wt% of a (meth)acrylate monomer (A) having an ethylene oxide chain in the molecule, 5 to 50 wt% of a urethane (meth)acrylate (B), 2 to 50 wt% of an epoxy (meth)acrylate (C), and 1 to 10 wt% of a photopolymerization initiator (D), wherein the glass transition temperature of a cured film of the composition is 10 to 65˚C, and the maximum value of the dynamic loss factor tan $\delta$ of the cured film is in the range of 0.35 to 0.75.

(2) The UV-curable resin composition for optical discs according to (1), wherein the (meth)acrylate monomer (A) having an ethylene oxide chain in the molecule is one or two or more selected from the group consisting of polyethylene glycol di(meth)acrylate, ethylene oxide-modified neopentyl glycol di(meth)acrylate, ethylene oxide-modified 1,6-hexanediol di(meth)acrylate, ethylene oxide-modified bisphenol A di(meth)acrylate, ethylene oxide-modified trimethylolpropane tri(meth)acrylate, ethylene oxide-modified pentaerythritol tetra(meth)acrylate and ethylene oxide-modified dipentaerythritol hexa(meth)acrylate.

(3) The UV-curable resin composition for optical discs according to (1) or (2), comprising 20 to 60 wt% of a (meth)acrylate monomer (A) having an ethylene oxide chain in the molecule, 5 to 40 wt% of an urethane (meth)acrylate (B), 2 to 40 wt% of an epoxy (meth)acrylate (C) and 1 to 10 wt% of a photopolymerization initiator (D).

(4) The UV-curable resin composition for optical discs according to any one of (1) to (3), wherein the urethane (meth)acrylate (B) is a reaction product of a polyester polyol or a polyether polyol with a diisocyanate and a 2-hydroxyethyl acrylate.

(5) The UV-curable resin composition for optical discs according to any one of (1) to (4), wherein the epoxy (meth)acrylate (C) is a bisphenol A type epoxy diacrylate.

(6) The UV-curable resin composition for optical discs according to any one of (1) to (5), wherein the photopolymerization initiator (D) is one or two or more selected from the group consisting of 1-hydroxycyclohexyl phenyl ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl)-2-methyl-propan-1-one, oligo[2-hydroxy-2-methyl-1-[4-(1-methylvinyl)phenyl]propanone], 2-methyl-1-[4-(methylthio)phenyl]-2-morphorinopropan-1-one, 2,4,6-trimethylbenzoyldiphenylphosphine oxide and bis(2,4,6-trimethylbenzoyl)-phenylphosphine oxide.

(7) The UV-curable resin composition for optical discs according to any one of (1) to (6), comprising an ethylenic unsaturated compound (E) other than (A).

(8) The UV-curable resin composition for optical discs according to any one of (1) to (7), further comprising a phosphoric (meth)acrylate.

(9) The UV-curable resin composition for optical discs according to any one of (1) to (8), which is a protective coating agent for light transmitting layers of optical discs which are used for recording and/or playback with blue laser.

(10) A method for producing a cured product of the UV-curable resin composition for optical discs according to any one of (1) to (9), the method comprising applying ultraviolet light to the composition.

(11) An optical disc having a layer of a cured product obtained by applying ultraviolet light to the UV-curable resin composition for optical discs according to any one of (1) to (9).

Advantageous Effects of Invention

The UV-curable resin compositions and cured products thereof according to the present invention have made it possible to provide a next-generation high-density optical disc which is minimized in warpage after curing, has long durability and shows high restorability of flaws and depressions. They have also realized elimination of the hard coat layers and recording auxiliary layers which have been conventionally used for efficient manufacture. They are useful as a resin for cover layers forming the light transmitting layers of optical discs which are used for recording and/or playback with blue laser.

Mode for Carrying out the Invention

The present invention provides UV-curable resin compositions for optical discs including 15 to 70 wt% of a (meth)acrylate monomer (A) having an ethylene oxide chain in the molecule, 5 to 50 wt% of a urethane (meth)acrylate (B), 2 to 50 wt% of an epoxy (meth)acrylate (C) and 1 to 10 wt% of a photopolymerization initiator (D), wherein the dynamic viscoelasticity, especially glass transition temperature of cured films is 10 to 65°C, and the maximum value of the dynamic loss factor tan δ of the cured films is in the range of 0.35 to 0.75. Thus, with the resin compositions of the present invention, it is possible to obtain cured films which are minimized in warpage after curing and a durability test, have long durability and also show high abrasion resistance when the compositions have the above-defined formulation (A) to (D), the glass transition temperature of cured films is 10 to 65°C and the maximum value of dynamic loss factor tan δ of cured films falls in the range of 0.35 to 0.75.

The value of dynamic loss factor tan δ of cured films may be easily determined from the ratio of loss elastic modulus to storage elastic modulus which may be determined from measurement of dynamic viscoelasticity (JIS K 7244-1). When the value of tan δ is below 0.35, the amount of warpage given to the substrate increases because of elevated rigidity of the resin. On the other hand, when the value of tan δ is higher than 0.75, abrasion resistance tends to deteriorate because of the low rigidity of the resin.

The glass transition temperature of cured films may be determined from the temperature at which the value of tan δ is maximized. When the glass transition temperature is outside the range specified in the present invention, that is, when it is below 10°C, abrasion resistance deteriorates because of too softened resin, and when the glass transition temperature is higher than 65°C, the amount of warpage given to the substrate tends to increase because of too hardening of the resin.

The UV-curable resin compositions according to the present invention comprise as an essential component a (meth)acrylate monomer (A) having an ethylene oxide chain in the molecule as a diluent. Examples thereof are polyethylene glycol di(meth)acrylate, ethylene oxide-modified neopentyl glycol di(meth)acrylate, ethylene oxide-modified 1,6-hexanediol di(meth)acrylate, ethylene oxide-modified bisphenol A di(meth)acrylate, ethylene oxide-modified trimethylolpropane tri(meth)acrylate, ethylene oxide-modified pentaerythritol tetra(meth)acrylate, and ethylene oxide-modified dipentaerythritol hexa(meth)acrylate. The content thereof in the composition is usually 15 to 70 wt%, preferably around 20 to 60 wt% in inner percentage.

The urethane (meth)acrylate (B) contained in the UV-curable resin compositions according to the present invention may be obtained by reacting a urethane oligomer obtained from a polyhydric alcohol having two or more hydroxyl groups in the molecule and an organic polyisocyanate compound with a hydroxyl(meth)acrylate compound.

Examples of the polyhydric alcohols are neopentyl glycol, 3-methyl-1,5-pentanediol, ethylene glycol, propylene glycol, 1,4-butanediol, 1,6-hexanediol, trimethylolpropane, pentaerythritol, tricyclodecane dimethylol, and bis[hydroxymethyl]-cyclohexane. They also include polyester polyols obtained by reacting these polyhydric alcohols with polybasic acids (such as succinic acid, phthalic acid, hexahydrophthalic anhydride, terephthalic acid, adipic acid, azelaic acid, and tetrahydrophthalic anhydride), caprolactone alcohols obtained from reaction of polyhydric alcohols and ε-caprolactone, polycarbonate polyols (such as polycarbonatediols obtained from reaction of 1,6-hexanediols and diphenyl carbonate), and polyether polyols (such as polyethylene glycol, polypropylene glycol, polytetramethylene glycol, and ethylene oxide-modified bisphenol A).

Examples of the above-mentioned organic polyisocyanates include diisocyanates such as isophorone diisocyanate, hexamethylene diisocyanate, tolylene diisocyanate, xylene diisocyanate and diphenylmethane-4,4'-diisocyanate, or isocyanates such as dicyclopentanyl isocyanate.

Examples of the hydroxyl(meth)acrylate compounds include hydroxyethyl (meth)acrylate, hydroxypropyl (meth)acrylate, hydroxybutyl (meth)acrylate, dimethylolcyclohexyl mono(meth)acrylate, and hydroxycaprolactone (meth)acrylate.

The reaction is carried out as follows. An organic polyisocyanate is mixed with a polyhydric alcohol under such a condition that the isocyanate groups of the polyisocyanate will stay at 11 to 2.0 equivalents to 1 equivalent of hydroxyl groups of the polyhydric alcohol, and reacted at a temperature of preferably 70 to 90°C to synthesize an urethane oligomer. Then a hydroxyl (meth)acrylate compound is mixed therewith under such a condition that the hydroxyl groups of the hydroxy (meth)acrylate compound will stay preferably at 1 to 1.5 equivalents to 1 equivalent of isocyanate groups of the urethane oligomer, and reacted at 70 to 90°C to obtain the objective urethane (meth)acrylate.

The urethane (meth)acrylates (B) may be used singly or as a mixture of two or more thereof at an arbitrary ratio. The content of the urethane (meth)acrylate (B) in the composition is usually 5 to 50 wt%, preferably 5 to 40 wt%, particularly preferably around 10 to 38 wt% in inner percentage. The molecular weight of the urethane (meth)acrylates is preferably in the range of 400 to 10,000.

The epoxy (meth)acrylate (C) used in the present invention is preferably one which has two or more epoxy residues in the molecule, and may be obtained from reaction of an epoxy resin with a (meth)acrylic acid. The epoxy resins that may serve as raw material are not specifically limited and examples thereof include phenyldiglycidyl ethers such as hydroquinone diglycidyl ether, catechol diglycidyl ether and resolcinol diglycidyl ether; bisphenol type epoxy compounds such as bisphenol A type epoxy resins, bisphenol F type epoxy resins, bisphenol S type epoxy resins and epoxy compounds of 2,2-bis(4-hydroxyphenyl)-1,1,1,3,3,3-hexafluoropropane; hydrogenated bisphenol type epoxy compounds such as hydrogenated bisphenol A type epoxy resins, hydrogenated bisphenol F type epoxy resins, hydrogenated bisphenol S type epoxy resins and epoxy compounds of hydrogenated 2,2-bis(4-hydroxyphenyl)-1,1,1,3,3,3-hexafiuoropropane; halogenated bisphenol type epoxy compounds such as brominated bisphenol A type epoxy resins and brominated bisphenol F type epoxy resins; alicyclic diglycidyl ether compounds such as EO/PO-modified bisphenol type epoxy resins and cyclohexanedimethanol diglycidyl ether compounds; aliphatic diglycidyl ether compounds such as 1,6-hexanediol diglycidyl ether, 1,4-butanediol diglycidyl ether and diethylene glycol diglycidyl ether; polysulfide type diglycidyl ether compounds such as polysulfide diglycidyl ether; biphenol type epoxy resins, and polyether type epoxy resins.

Examples of commercial products of these epoxy compounds include Bisphenol A type epoxy resins such as jER828, jER1001, jER1002, jER1003, jER1004 (products of Japan Epoxy Resin Co., Ltd.), Epomic R-140, Epomic It-301, Epomic R-304 (products of Mitsui Chemical Co.), DER-331, DER-332, DER-324 (products of Dow Chemical Co.), Epiclon 840, Epiclon 850 (products of Dainippon Ink and Chemicals Co., Ltd.), UVR-6410 (product of Union Carbide) and YD-8125 (product af Tohto Kasei Co., Ltd.); bisphenol F type epoxy resins such as UVR-6490 (product of Union Carbide), YDF-2001, YDF-2004, YDF-8170 (products of Tahto Kasei Co., Ltd.), Epiclon 830 and Epiclon 835 (products of Dainippon Ink and Chemicals Co., Ltd.); hydrogenated bisphenol A type epoxy resins such as HBPA-DGE (product of Maruzen Petrochemical Co., Ltd.) and RIKARESIN HBE-100 (product of New Japan Chemical Co., Ltd.); brominated bisphenol A type epoxy resins such as Deer-513, DER-514 and DER-542 (products of Dow Chemical Co.); PO-modified bisphenol A type epoxy resins such as Epolight 3002 (product of Kyoeisha Chemical Co.,Ltd.); alicyclic epoxy such as Celloxide 2021 (product of Daicel Chemical Industries Co., Ltd.), RIKARESIN DME- 100 (product of New Japan Chemical Co., Ltd.) and EX-216 (product ofNagase ChemteX Corp); aliphatic diglycidyl ether compounds such as ED-503 (product of ADEKA Corp.), RIKARESIN W-100 (product of New Japan Chemical Co., Ltd.), EX-212, EX-214, EX-850 (products of Nagase ChemteX Corp.); polysulfide type diglycidyl ether compounds: FLEP-50 and FLEP-60 (products of Toray Fine Chemicals Co., Ltd.); biphenol type epoxy compounds: YX-4000 (product of Japan Epoxy Resin Co., Ltd.); polyether type epoxy compounds: Epolight 100E and Epolight 200P (products of Kyoeisha Chemical Co., Ltd.).

These epoxy (meth)acrylates (C) may be used singly or as a mixture of two or more thereof at an arbitrary ratio. The content of the epoxy (meth)acrylate (C) in the composition is 2 to 50 wt%, preferably 2 to 40 wt%, particularly most preferably around 3 to 35 wt% in inner percentage.

Examples of the photopolymerization initiator (D) to be contained in the UV-curable resin compositions of the present invention include 1-hydroxycyclohexyl phenyl ketone (Irgacure 184 produced by Ciba Speciality Chemicals Co., Ltd.), 1-[4-(2-hydroxyethoxy)-phenyl]-2-hydroxy-2-mcthyl-1-prapan-1-one (Irgacure 2959 produced by Ciba Speciality Chemicals Co., Ltd.), 2-hydroxy-1-{4-[4-(2-hydroxy-2-methyl-propionyl)-benzyl]-phenyl}-2-mcthyl-prapan-1-one (Irgacure 127 produced by Ciba Speciality Chemicals Co., Ltd.), 2,2-dimethoxy-2-phenylacetophenone (Irgacure 651 produced by Ciba Speciality Chemicals Co., Ltd.), oligo[2-hydroxy-2- methyl-1-[4-(1-methylvinyl)phenyl]propanone] (Esacure ONE produced by Lamberti Co, Ltd.), 2-hydroxy-2-methyl-1-phenyl-propan-1-one (Darocure 1173 produced by Ciba Speciality Chemicals Co., Ltd.), 2-methyl-1-[4-(methylthio)phenyl]-2-morphalinopropan-1-one (Irgacure 907 produced by Ciba Speciality Chemicals Co., Ltd.), 2-benzyl-2-dimethylamino-1-(4-morpholinophenyl)-butane-1-one, 2-chlorothioxanetone, 2,4-dimethylthioxanetone, 2,4-diisopropylthioxantone, isopropylthioxantone, 2,4,6-trimethylbenzoyldiphenylphosphine oxide (Lucirin TPO produced by BASF), bis(2,4,6-trimethylbenzoyl)-phenylphosphine oxide (Irgacure 819 produced by Ciba Speciality Chemicals Co., Ltd..), and bis(2,6-dimethoxybenzoyl)-2,4,4-trimethylpentylphosphine oxide.

Preferred examples of the photopolymerization initiator (D) include 1-hydroxycyclohexyl phenyl ketone (Irgacure 184 produced by Ciba Speciality Chemicals Co., Ltd.), 1-[4-(2-hydroxyethoxy)-phenyl]-2-hydroxy-2-methyl-1-propan-1-one (Irgacure 2959 produced by Ciba Speciality Chemicals Co., Ltd.), 2-hydroxy-1-{4-[4-(2-hydroxy-2-methylpropionyl)-benzyl]-phenyl}-2-methyl-propan-1-one (Irgacure 127 produced by Ciba Speciality Chemicals Co., Ltd.), oligo[2-hydroxy-2-methyl-1-[4-(1-methylvinyl)phenyl]propanone] (Esacure ONE produced by Lamberti Co., Ltd.), 2-methyl-1-[4-(methylthio)phenyl]-2-morpholinopropan-1-one (Irgacure 907 produced by Ciba Speciality Chemicals Co., Ltd.), 2,4,6-trimethylbenzoyldiphenylphosphine oxide (Lucirin TPO produced by BASF), and bis(2,4,6-trimethylbenzoyl)-phenylphosphine oxide (Irgacure 819 produced by Ciba Speciality Chemicals Co., Ltd.).

These photopolymerization initiators may be used singly or as a mixture of two or more thereof at an arbitrary ratio. It is also possible to use them in combination with a photopolymerization initiation assistant such as amines.

The content of the photopolymerization initiator (D) in the UV-curable resin compositions of the present invention is usually 1 to 10 wt%, preferably around 3 to 8 wt%.

Examples of the photopolymerization initiation assistants such as amines usable in the present invention include diethanolamine, 2-dimethylaminoethyl benzoate, dimethylaminoacetophenone, p-dimethylaminobenzoic acid ethyl esters and p-dimethylaminobenzoic acid isoamyl esters. When a photopolymerization initiation assistant is used, it is contained in an amount of 0.05 to 5 wt%, particularly preferably around 0.1 to 3 wt% in the UV-curable resin compositions of the present invention.

In the UV-curable resin compositions according to the present invention, as a diluent, it is possible to incorporate ethylenic unsaturated compounds (E) other than the (meth)acrylates (A) having an ethylene oxide chain in the molecule. Examples of such ethylenic unsaturated compounds include (meth)acrylate monomers, which may be used optionally.

The (meth)acrylate monomers usable as other ethylenic unsaturated compounds (E) may be divided into two types: monofunctional monomers having one (meth)acrylate group in the molecule and polyfunctional monomers having two or more (meth)acrylate groups in the molecule.

Examples of the monofunctional monomers having one (meth)acrytate group in the molecule include dicyclopentenyloxyethyl (meth)acrylate, tricyclodecane (meth)acrylate, dicyclopentanyl (meth)acrylate, isoboronyl (meth)acrylate, adamantyl (meth)acrylate, phenyloxyethyl (meth)acrylate, phenyldioxyethyl (meth)acrylate, nonylphenyloxyethyl (meth)acrylate, benzyl (meth)acrylate, tetrahydrofurfuryl (meth)acrylate, morpholine (meth)acrylate, 2-hydroxy-3-phenoxypropyl (meth)acrylate, lauryl (meth)acrylate, methoxytripropylene glycol mono(meth)acrylate, 2-hydroxyethyl (meth)acrylate, 2-hydroxypropyl (meth)acrylate, and ethylcarbitol (meth)acrylate.

Examples of the (meth)acrylate monomers having two or more (meth)acrylate groups in the molecule include neopentyl glycol di(meth)acrylate, tricyclodecanedimethylol di(meth)acrylate, hydroxypivalaldehyde-modified trimethylolpropane di(meth)acrylate, hydroxypivalic acid neopentyl glycol di(meth)acrylate, dicyclopentanyl di(meth)acrylate, 1,6-hexanediol di(meth)acrylate, dipropylene glycol di(meth)acrylate, tripropylene glycol di(meth)acrylate, polypropylene glycol di(meth)acrylate, propylene oxide-modified neopentyl glycol di(meth)acrylate, propylene oxide-modified 1,6-hexanediol di(meth)acrylate, and tris[(meth)acryloxyethyl] isocyanurate.

When these (meth)acrylate monomers are used in the UV-curable resin compositions of the present invention, such (meth)acrylate monomers may be used singly, and two or more thereof may be used at an arbitrary ratio. The monofunctional monomers are preferably dicyclopentenyloxyethyl (meth)acrylate, phenyldioxyethyl (meth)acrylate, 2-hydroxy-3-phenoxypropyl (meth)acrylate and methoxytripropylene glycol mono(meth)acrylate in view of production stability. The bi- and higher-order functional monomers are preferably those having a large molecular weight.

In case other ethylenic unsaturated compounds (E) are used, their content in the UV-curable resin compositions of the present invention may be properly changed but is usually around 5 to 40 wt%.

In the UV-curable resin compositions of the present invention, if necessary a phosphoric (meth)acrylate may be added. The phosphoric (meth)acrylates are useful for strengthening adhesion between aluminum, silver or silver alloy and cured adhesive, but their amount used is limited as they may corrode the metallic films.

The phosphoric (meth)acrylates that may be contained in the UV-curable resin compositions of the present invention are not limited to any specific types; it is possible to use all types of (meth)acrylates having a phosphoric ester skeleton, including monoesters, diesters and triesters. Examples of such phosphoric (meth)acrylates are ethylene oxide-modified phenoxylated phosphoric (meth)acrylates, ethylene oxide-modified butoxylated phosphoric (meth)acrylates, ethylene oxide-modified octyloxylated phosphoric (meth)acrylates, ethylene oxide-modified phosphoric di(meth)acrylates and ethylene oxide-modified phosphoric tri(meth)acrylates. Such phosphoric (meth)acrylates are commercially available under, for instance, trade name PM-2 (ethylene oxide-modified phosphoric dimethacrylate) from Nippon Kayaku Co., Ltd. Ethylene oxide-modified phosphoric dimethacrylates are preferably used in the present invention. The phosphoric (meth)acrylates may be used singly, and two or more thereof may be used at an arbitrary ratio. When a phosphoric (meth)acrylate is contained in the resin compositions for adhesives of the present invention, its content is usually 0.005 to 5 wt%, preferably 0.05 to 3 wt%.

The UV-curable resin compositions for optical discs of the present invention may contain where necessary various additives such as an antioxidant, an organic solvent, a silane coupling agent, a polymerization inhibitor, an antistat, a surface lubricant, a fluorescent brightener, a light stabilizer (such as a hindered amine compound), and a filler. Examples of the hindered amine compounds usable as a light stabilizer include 1,2,2,6,6-pentamethyl-4-piperidyl alcohol, 2,2,6,6-tetramethyl-4-piperidyl alcohol, 1,2,2,6,6-pentamethyl-4-piperidyl (meth)acrylate (LA-82), 2,2,6,6-tetramethyl-4-piperidyl (meth)acrylate, and commercial products of Ciba Speciality Chemicals Co., Ltd., such as CHIMASSORB 119FL, CHIMASSORB 2020FDL, CHIMASSORM 944FDL, TINUVIN 622LD, TINUVIN 123S, TINUVIN 144, TINUVIN 765, TINUVIN 770DF, TINUVIN 111FDL, TINUVIN 783FDL, TINUVIN 791FB, TINUVIN XT850FF, and TINUVIN XT85FF.

Also, in the present invention, in order to allow easy wipe-off of the fingerprint oil adhering to the cover layer surface, a silicon type or fluorine type leveling agent, a surface lubricant or the like may be contained to modify the hard coat layer surface. Preferred examples of the silicon type leveling agents include BYK-307, BYK-322, BYK-323, BYK-331, BYK-333, BYK-UV3500, BYK-UV3510, BYK-UV3530, BYK-UV3570 (trade names of the commercial products of poly(di)methylsiloxane compounds produced by BYK-Chemie). Examples of the fluorine type surface modifiers are Modiper F-100, F-110, F-200, F-202, F-2020, F-220, F-500 and F-600 (trade names of the commercial products of fluorine-containing block copolymers produced by NOF Corp.), Ftergent 710F, 710FX, 730FL, 730F, 750FL, 750FX (trade names of the commercial products of fluorine-containing oligomers produced by Neos Co., Ltd.). The content thereof in the UV-curable resin compositions of the present invention is preferably 0.01 to 5 wt%, particularly preferably 0.1 to 3 wt%.

The UV-curable resin compositions of the present invention may be obtained by mixing and dissolving the above-described component materials by means of stirring at 20 to 80°C. The obtained compositions may be filtered.

The cured products of the present invention may be obtained by irradiating the UV-curable resin compositions of the present invention with light such as ultraviolet light or visible light by the methods described below.

Viscosity of the UV-curable resin compositions of the present invention as measured by a Brookfield viscometer at 25˚C is preferably in the range from 400 to 6,000 mPa·S. When viscosity of the resin composition is below 400 mPa·S, film thickness tends to slim down because of too low viscosity for coating to a thickness of around 100 $\mu$m, while when viscosity of the composition is above 6,000 mPa·S, film thickness tends to increase because of too high viscosity for coating to a thickness of around 100 $\mu$m.

For curing by light irradiation of the UV-curable resin compositions of the present invention, any type of light source may be used provided that it is a lamp capable of emitting ultraviolet to near ultraviolet light. It is possible to use, for example, a low pressure, high pressure or ultra-high pressure mercury lamp, metal halide lamp, (pulse) xenon lamp or electrodeless lamp.

Any coating method may be used for protective coating agent for the light transmitting layer using a UV-curable resin composition of the present invention, provided that the film thickness may be made 50 to 100 $\mu$m. Examples of the coating methods include spin coating, 2P coating, roll coating and screen printing.

Since blue laser of around 400 nm is used for read and/or write in the next-generation high-density optical discs, it is desirable that the cured products with a film thickness of 90 to 100 $\mu$m have a light transmittance of 80% or higher at 405 nm.

Further, the optical discs according to the present invention preferably have a structure in which a layer of a cured product of the UV-curable resin composition is formed on the side where recording light and/or playback light is applied.

Also, when the physical strength of the light transmitting layer formed by using protective coating agent for the light transmitting layer of the present invention is weak, hard coating may be applied, if necessary, on the surface of the light transmitting layer.

Examples

The present invention will be described in more detail below with reference to the Examples thereof.

Examples and Test Examples

In the present invention, glass transition temperature and dynamic loss factor tan $\delta$ were determined according to the dynamic viscoelasticity determination method based on JIS K 7244-5. Samples were prepared by curing the test pieces to a size of 5 cm (length) x 1 cm (width) x 1 mm (thickness) at an integrated light volume of 1 J/cm$^2$ using Fusion lamp D bulbs, and measured by viscoelastometer DMS6100 produced by SII Nanotechnology Inc. Measurement was made in a bending mode under the conditions of an amplitude loading of 10 mN, frequency of 10 Hz and a temperature rising rate of 2˚C/min in a temperature range of - 50˚C to 200˚C. The temperature at which the value of tan $\delta$ was maximized was given as glass transition temperature.

In the present invention, the warpage, durability and abrasion resistance tests were conducted on the blu-ray discs made in accordance with the following steps 1 to 4.

1. A silver alloy GB-100 produced by Kobe Steel, Ltd. was used for making a PC substrate storing data for 1.1 mm thick, 12 cm-diameter blu-ray discs, and the substrate was sputtered to a film thickness of 30 nm on the average to make a disc substrate with a silver reflecting layer.

2. This substrate was placed on a spin table so that the silver reflecting layer surface would face upwards, and subjected to circular capping so as to cover up to 11.5 mm along the inner diameter, and then 2.5 g of a UV-curable resin composition of the present invention was supplied onto the central cap.

3. Then spin coating was conducted for 4 to 7 seconds at a speed in the range of 1,000 to 1,500 rpm in conformity to viscosity of the UV-curable resin composition of the present invention, forming a 95 to 105 $\mu$m thick film coating. Close to the end of spin coating, 2-shot irradiation was conducted with a xenon flash lamp to cure the composition to the extent that its surface fluidity would be lost.

4. Using a xenon flash lamp, 8-shot irradiation was performed at 80 J from the upper side to perfectly cure the UV-curable resin composition of the present invention, thereby making a blu-ray disc having a light transmitting layer.

(a) Warpage

Film thickness and warpage of the resin layer were determined by 1'romcteus MT-146 produced by Dr Schenk, a mechanical properties meter for optical discs. Since difference in the amount of warpage becomes increasingly conspicuous toward the outer periphery of the disc, evaluation was made at a point of 58 mm along the radius close to the outer peripheral edge.

Initial phase warpage (warpage in coating) and warpage after the durability test in the table were calculated from the following equations (Expression 1 and Expression 2):

Expression 1:

$$\text{(Initial phase warpage)} = \text{(warpage of substrate after coating)} - \text{(warpage of substrate before coating)}$$

Expression 2:

$$\text{(Warpage after durability test)} = \text{(warpage of coated substrate after 240 hours at } 80°C \text{ and } 85\% \text{ RH)} - \text{(warpage of substrate before coating)}$$

The unit of warpage was indicated by degree, and judgment was made according to the following criterion:

○ (good) ... initial phase warpage > -0.6 and amount of warpage after durability test > -0.6
× (fail) ... initial phase warpage ≤ -0.6 or/and amount of warpage after durability test ≤ -0.6

(b) Durability test

In the durability test, the blu-ray discs made from the process described above were left still in an 80˚C, 85% RH thermo-humidistat for 240 hours, and evaluated by ODU-1000 produced by Pulstec Industrial Co., Ltd. which is a signal data meter for blu-ray discs. In the judgment of evaluation, jitter was measured and judgment was made by the following standards. Jitter is one of electrical signals of blu-ray discs. The higher its value, the more the signal data of blu-ray discs deteriorate, and if it is 10% of more, data are difficult to read and write.

○ (good) ... Jitter is less than 10%.
× (flail) ... Jitter is 10% or above.

(c) Abrasion resistance test

In the abrasion resistance test, the light transmitting layer surface of each blu-ray disc produced in the above-described process was subjected to 5-turn abrasion by Taber Abrasion Tester TS (truck wheel: No. CS-10F) produced by Toyo Seiki Seisaku-Sho, Ltd., at 70 rpm under a load of 250 g, and judgment was made by evaluating jitter in the same way as in the durability test described above.

○ (good) ... Jitter is less than 10%.
× (fail) ... Jitter is 10% or above.

Table 1. Resin composition and evaluation results

|  | Example 1 | Example 2 | Example 3 | Example 4 | Comparative Example1 | Comparative Example 2 | Comparative Example 3 |
|---|---|---|---|---|---|---|---|
| Component (A) (parts) |  |  |  |  |  |  |  |
| EM-1 | 35 |  | 25 | 50 |  |  | 50 |
| EM-2 |  | 27.5 |  |  |  | 20 |  |
| EM-3 |  |  |  |  | 40 |  |  |

(continued)

|  | Example 1 | Example 2 | Example 3 | Example 4 | Comparative Example1 | Comparative Example 2 | Comparative Example 3 |
|---|---|---|---|---|---|---|---|
| EM-4 |  |  |  |  |  | 25 |  |
| Component (B) (parts) |  |  |  |  |  |  |  |
| UA-1 | 25 | 20 |  |  |  | 30 |  |
| UA-2 |  | 17.5 | 40 | 20 | 40 |  |  |
| Component (C) (parts) |  |  |  |  |  |  |  |
| EPA-1 | 10 | 5 | 5 | 20 |  |  | 40 |
| Component (D) (parts) |  |  |  |  |  |  |  |
| Irgacure 184 |  |  |  |  | 3 |  | 3 |
| Esacure ONE | 5 | 5 | 5 |  |  | 5 |  |
| LucirinTPO | 0.5 | 0.5 | 0.5 | 0.5 |  |  | 0.5 |
| Component (E) (parts) |  |  |  |  |  |  |  |
| AM-1 | 30 | 30 | 10 |  |  | 25 |  |
| AM-2 |  |  | 20 | 10 |  |  | 10 |
| AM-3 |  |  |  |  | 20 |  |  |
| Other components (parts) |  |  |  |  |  |  |  |
| LA-82 | 0.5 | 0.5 | 0.5 | 0.5 | 0.5 | 0.5 | 1 |
| PM-2 | 0.1 | 0.1 |  |  | 0.1 | 0.1 |  |
| PMP | 0.1 |  |  |  |  |  |  |
| KBM-803 |  |  |  | 0.5 | 0.1 |  | 0.1 |
| BYK-333 |  |  |  | 0.5 |  |  |  |
| L-7002 | 0.5 | 0.5 |  |  |  | 0.5 |  |
| Ftergent 730FL |  |  | 1 |  |  |  |  |
|  |  |  |  |  |  |  |  |
| Maximum value of tan $\delta$ | 0.72 | 0.40 | 0.45 | 0.45 | 0.61 | 0.41 | 0.30 |
| Glass transition temperature (˚C) | 36 | 64 | 41 | 41 | 5 | 71 | 55 |
| Component (A) in the compositions (wt%) | 33 | 26 | 23 | 48 | 39 | 42 | 48 |
| (Warpage) |  |  |  |  |  |  |  |

(continued)

| | Example 1 | Example 2 | Example 3 | Example 4 | Comparative Example1 | Comparative Example 2 | Comparative Example 3 |
|---|---|---|---|---|---|---|---|
| Amount of warpage in coating (degree) | -0.1 | 0.2 | -0.2 | -0.1 | 0.0 | -0.5 | -0.6 |
| Amount or warpage after durability test (degree) | -0.2 | -0.3 | -0.3 | -0.2 | -0.1 | -0.9 | -0.9 |
| Judgment of warpage (Durability) | ○ | ○ | ○ | ○ | ○ | × | × |
| Jitter after durability test (%) | 5.6 | 6.2 | 7.2 | 5.5 | 5.6 | 7.8 | 5.8 |
| Judgment of durability test | ○ | ○ | ○ | ○ | ○ | ○ | ○ |
| (Abrasion resistance) | | | | | | | |
| Jitter after abrasion resistance test (%) | 7.2 | 8.2 | 7.4 | 8.1 | 11.5 | 6.7 | 6.8 |
| Judgment of abrasion resistance | ○ | ○ | ○ | ○ | × | ○ | ○ |

The abbreviations used for the respective components in Table 1 are as follows. EM- 1 : Bisphenol A type diacrylate modified with 10 moles of ethylene oxide, produced by Dai-ichi Kogyo Seiyaku Co., Ltd.
EM-2: Polyethylene glycol (MW 300) diacrylate, produced by Dai-ichi Kogyo Seiyaku Co., Ltd. EM-3: Trimethylolpropane triacrylate modified with 3 moles of ethylene oxide, produced by Nippon Kayaku Co., Ltd.
EM-4: Bisphenol A type diacrylate modified with 4 moles of ethylene oxide, produced by Dai-ichi Kogyo Seiyaku Co., Ltd.
UA-1: Urethane acrylate obtained by reacting 1 mole of polytetramethylene glycol (MW 850) and 2 moles of isophorone diisocyanate, and then reacting the resultant product with 2 moles of 2-hydroxyethyl acrylate
A-2: Urethane acrylate obtained by reacting 1 mole of polypropylene glycol (MW 1,000) and 2 moles of tolylene diisocyanate, and then reacting the resultant product with 2 moles of 2-hydroxyethyl acrylate
EPA-1: Epoxy acrylate obtained by reacting a bisphenol A type epoxy resin (epoxy equivalent 185 g/equivalent) with 1 molar equivalent of epoxy groups and 1 mole of acrylic acid to an acid value of 0.5 mg.KOH/g
Irgacure 184: 1-hydroxycyclohexyl phenyl ketone, photopolymerization initiator, produced by Ciba Speciality Chemicals Co., Ltd.
Esacure ONE: oligo[2-hydroxy-2-methyl-1-[4-(1-methylvinyl)phenyl]propanone], photopolymerization initiator, produced by Lamberti Co., Ltd.
Lucirine TPO: 2,4,6-trimethylbenzoyldiphenyl-phosphine oxide, photopolymerization initiator, produced by BASF Co., Ltd.
AM-1: dicyclopentenyloxyethyl acrylate, produced by Hitachi Chemical Industries Co., Ltd.
AM-2: 1,6-hexanediol diacrylate
AM-3: lauryl acrylate, produced by NOF Corp.
LA-82: 1,2,2,6,6-pentamethyl-4-piperidyl methacrylate, produced by ADEKA Corp.
PM-2: ethylene oxide-modified phosphoric dimethacrylate, produced by Nippon Kayaku Co., Ltd.
PMP: 4-mercaptophenol
KBM-803: 3-mercaptopropyltrimethoxysilane, produced by Shin-Etsu Chemical Industries Co., Ltd.

BYK-333: silicon leveling agent, produced by BYK-Chemie

L-7002: silicon leveling agent, produced by Toray Dow Corning Co., Ltd.

Ftergent 730FL: fluorine monomer-containing oligomer, produced by Neos Co., Ltd.

As evident from Table 1, Examples 1 to 4 representing the UV-curablc resin compositions of the present invention and their cured products are very limited in warpage after the curing and durability test, have long durability and also show excellent performance in abrasion resistance. On the other hand, in Comparative Examples 1 to 3, as evaluation results show, warpage after the durability test is large for the resin composition where the maximum value of tan $\delta$ is less than 0. 3 5 or the glass transition temperature is higher than 65˚C, while abrasion resistance deteriorates for the resin composition where the maximum value of tan $\delta$ is greater than 0.75 or the glass transition temperature is lower than 10˚C.

According to the UV-curable resin compositions of the present invention and their cured products, since hard coat layer for compensating surface abrasion resistance is unnecessitated, the optical disc production process is simplified, making it possible to elevate production efficiency. Thus, the present invention is extremely useful as a protective coating agent for light transmitting layers for forming the light transmitting layers of optical discs which are used for recording and/or playback by using blue laser.

Industrial Applicability

The present invention realizes efficient production of the next-generation high-density optical discs which are minimized in warpage after curing and have long durability and high abrasion resistance. While the present invention is primarily intended to provide a protective coating agent for the light transmitting layers of the next-generation high-density optical discs using blue laser, it is also useful as a coating agent for the materials of optical discs using red laser and the substrates which are required to be transparent, suppressed in warpage and capable of showing high protective performance for abrasion and corrosion resistance.

**Claims**

1. A UV-curable resin composition for optical discs, comprising 15 to 70 wt% of a (meth)acrylate monomer (A) having an ethylene oxide chain in the molecule, 5 to 50 wt% of a urethane (meth)acrylate (B), 2 to 50 wt% of an epoxy (meth)acrylate (C), and 1 to 10 wt% of a photopolymerization initiator (D), wherein the glass transition temperature of a cured film of the composition is 10 to 65˚C, and the maximum value of the dynamic loss factor tan $\delta$ of the cured film is in the range of 0.35 to 0.75.

2. The UV-curable resin composition for optical discs according to claim 1, wherein the (meth)acrylate monomer (A) having an ethylene oxide chain in the molecule is one or two or more selected from the group consisting of polyethylene glycol di(meth)acrylate, ethylene oxide-modified neopentyl glycol di(meth)acrylate, ethylene oxide-modified 1,6-hexanediol di(meth)acrylate, ethylene oxide-modified bisphenol A di(meth)acrylate, ethylene oxide-modified trimethylolpropane tri(meth)acrylate, ethylene oxide-modified pentaerythritol tetra(meth)acrylate, and ethylene oxide-modified dipentaerythritol hexa(meth)acrylate.

3. The UV-curable resin composition for optical discs according to claim 1 or 2, comprising 20 to 60 wt% of a (meth)acrylate monomer (A) having an ethylene oxide chain in the molecule, 5 to 40 wt% of an urethane (meth)acrylate (B), 2 to 40 wt% of an epoxy (meth)acrylate (C) and 1 to 10 wt% of a photopolymerization initiator (D).

4. The UV-curable resin composition for optical discs according to any one of claims 1 to 3, wherein the urethane (meth)acrylate (B) is a reaction product of a polyester polyol I or a polyether polyol with a diisocyanate and a 2-hydroxyethyl acrylate.

5. The UV-curable resin composition for optical discs according to any one of claims 1 to 4, wherein the epoxy (meth)acrylate (C) is a bisphenol A type epoxy diacrylate.

6. The UV-curable resin composition for optical discs according to any one of claims 1 to 5, wherein the photopolymerization initiator (D) is one or two or more selected from the group consisting of 1-hydroxycyclohexyl phenyl ketone, 1-[4-(2-hydroxyethoxy)-phenyl]-2-hydroxy-2-methyl-1-propan-1-one, 2-hydroxy-1- {4-[4-(2-hydroxy-2-methyl-propionyl)-benzyl]-pheny} -2-methyl-propan- 1-one, oligo[2-hydroxy-2-methyl-1-[4-(1-methylvinyl)phenyl]propanone], 2-methyl-1-[4-(methylthio)phenyl]-2-morphorinopropan-1-one, 2,4,6-trimethylbenzoyldiphenylphosphine oxide and bis(2,4,6-trimethylbenzoyl)-phenylphosphine oxide.

7.  The UV-curable resin composition for optical discs according to any one of claims 1 to 6, comprising an ethylenic unsaturated compound (E) other than (A).

8.  The UV-curable resin composition for optical discs according to any one of claims 1 to 7, further comprising a phosphoric (meth)acrylate.

9.  The UV-curable resin composition for optical discs according to any one of claims 1 to 8, which is a protective coating agent for light transmitting layers of optical discs which are used for recording and/or playback with blue laser.

10. A method for producing a cured product of the UV-curable resin composition for optical discs according to any one of claims 1 to 9, the method comprising applying ultraviolet light to the composition.

11. An optical disc having a layer of a cured product obtained by applying ultraviolet light to the UV-curable resin composition for optical discs according to any one of claims 1 to 9.

## INTERNATIONAL SEARCH REPORT

| | International application No. |
|---|---|
| | PCT/JP2009/068791 |

A. CLASSIFICATION OF SUBJECT MATTER
*G11B7/254*(2006.01)i, *C08F290/06*(2006.01)i, *C08F299/02*(2006.01)i,
*C08G18/67*(2006.01)i, *C08G59/17*(2006.01)i, *G11B7/24*(2006.01)i, *G11B7/257*
(2006.01)i

According to International Patent Classification (IPC) or to both national classification and IPC

B. FIELDS SEARCHED

Minimum documentation searched (classification system followed by classification symbols)
G11B7/254, C08F290/06, C08F299/02, C08G18/67, C08G59/17, G11B7/24,
G11B7/257

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-140545 A  (Mitsubishi Kagaku Media Co., Ltd.), 19 June 2008 (19.06.2008), paragraphs [0070] to [0072] & US 2005/0226116 A1    & EP 1575035 A1 & WO 2004/057585 A1 | 1-11 |
| A | JP 2-312021 A  (TDK Corp.), 27 December 1990 (27.12.1990), page 9, upper right column, line 1 to page 9, lower right column, line 4; page 14, upper left column, line 9 to page 14, upper left column, line 13 (Family: none) | 1-11 |

☒ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 January, 2010 (14.01.10) | 26 January, 2010 (26.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

13

**INTERNATIONAL SEARCH REPORT**

| International application No. |
|---|
| PCT/JP2009/068791 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-79139 A  (TDK Corp.),<br>24 March 1998 (24.03.1998),<br>claim 1; paragraphs [0011], [0016]<br>& US 5936934 A | 1-11 |
| A | JP 4-78578 A  (TDK Corp.),<br>12 March 1992 (12.03.1992),<br>page 4, upper right column, line 6 to page 4,<br>lower left column, line 2<br>(Family: none) | 1-11 |

Form PCT/ISA/210 (continuation of second sheet) (April 2007)

| INTERNATIONAL SEARCH REPORT | International application No. |
|---|---|
| | PCT/JP2009/068791 |

Since the present application includes no drawing, there is no any figure publicly opened together with the abstract.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11273147 A
- JP 2002230831 A
- JP 2005171154 A